# EUROPEAN PATENT SPECIFICATION

(11) **EP 3 402 685 B1**
(45) Date of publication and mention of the grant of the patent: **05.05.2021**
(21) Application number: 17700407.4
(22) Date of filing: 12.01.2017
(51) Int. Cl.: B60H 1/00, F16L 41/08, F16L 23/036, F16L 23/026

(54) **CONNECTION ARRANGEMENT FOR AN AIR CONDITIONING SYSTEM AND MOBILE AIR CONDITIONING SYSTEM**
VERBINDUNGSANORDNUNG FÜR EINE KLIMAANLAGE UND MOBILES KLIMATISIERUNGSSYSTEM
AGENCEMENT DE RACCORDEMENT DESTINÉ À UN SYSTÈME DE CONDITIONNEMENT D'AIR ET SYSTÈME DE CONDITIONNEMENT D'AIR MOBILE

(30) Priority: 15.01.2016 DE 202016100195 U
(43) Date of publication of application: 21.11.2018
(73) Proprietor: TI Automotive Engineering Centre (Heidelberg) GmbH, 69123 Heidelberg (DE)
(72) Inventor: TILDERS, Benno, 67346 Speyer (DE)
(74) Representative: Reiser & Partner Patentanwälte mbB
(86) International application number: PCT/EP2017/050594
(87) International publication number: WO 2017/121818

(56) References cited:
- EP-A2- 1 843 072
- DE-U1-202015 103 455
- FR-A1- 2 901 342
- US-B1- 6 386 593
- US-B1- 6 481 756
- US-B1- 6 908 117

## Description

The invention relates to a connection arrangement for an air conditioning system, comprising a connector, which is connected to a first pipe and has a passage channel and at least one cylindrical portion, which is inserted into a further pipe or into another component of the air conditioning system, and a radial flange to which a sealing element is assigned.

Connection arrangements of this type are generally used in mobile air conditioning systems. Their design has to be particularly compact and lightweight. Pipe connections in mobile air conditioning systems therefore commonly consist of plastic material. The pipes are attached via connectors, which are provided with sealing elements. It is necessary to connect the connectors firmly and with durable sealing both to the pipe and detachably to a further pipe or to another component. However, in air conditioning systems and in particular in mobile air conditioning systems, in addition to high pressures and temperatures, vibrations occur and are transmitted within the components of the air conditioning system. The connection arrangement therefore has to be constructed in such a way that a durable connection is provided in spite of vibrations and high pressures, and that coolant leakage cannot occur.

Moreover, it is important that mobile air conditioning systems are constructed to be lightweight. Therefore, the number of fastening means fixing together the components of the air conditioning system is also limited. Configuring the connectors for providing durable sealing of the connection arrangement has been difficult so far.

US 6,908,117 B1; US 6,481,756 B1 and US 6,386,593 B1 each show a connection arrangement for an air conditioning system, comprising a connector, which is connected to a first pipe and has a passage channel and at least one cylindrical portion, which can be inserted into a further pipe or into another component of the air conditioning system.

The object of the invention is to provide a connection arrangement for an air conditioning system having a low weight and having a durable and tight connection of components of an air conditioning system.

This object is achieved by the features of claims 1 and 11. The dependent claims refer to advantageous embodiments.

To achieve the object, a support body is assigned to the radial flange, the support body enclosing the passage channel and being provided with a radially protruding projection, wherein the projection is equipped to be able to receive at least one fastening means.

The connector according to the invention has a substantially cylindrical form and is provided with a sealing element which is assigned to the radial flange. The sealing element provides sealing in an axial direction and is pressed against the further pipe or the other component by the radial flange at the front face. To connect the connector to the pipe, a connection means, for example a screw, is provided, and is arranged parallel to the axis of the passage channel but radially offset, specifically outside the passage channel. So as to be able to provide sufficient sealing force over the entire circumference of the radial flange, sufficient preload of the fastening means is necessary. This results in a considerable bending stress in the connector, so that it has not been possible so far to produce such connectors from plastic material.

According to the invention, a separate support body is provided which transmits the contact force of the connection means to the radial flange of the connector. This results in a functional separation, wherein the support body is being formed in such a way that it can receive high bending stresses and transmit them steadily to the radial flange.

The radial flange provides firm and steady seating of the connector and a durably tight connection between the pipe or component and the connector.

Thus, as a result of the separately provided support body, it is possible to introduce high forces into the connection, which are exerted by the fastening means and distributed via the support body. Due to this embodiment, it is possible to use sealing elements which require a high contact force. This requirement applies in particular to sealing elements which lie against a pipe or another component at the radial flange or at the end face and which seal in the axial direction. Such sealing elements require a high contact pressure so as to ensure a sufficient and durable sealing efficiency. The support body is formed in such a way that it can be placed on the radial flange. The support body and the radial flange are formed congruently with one another at the mutually facing faces.

The pipe or component of the air conditioning system which is to be connected to the connector, also preferably comprises at least one flange. This flange is suited to receive the connection element. For connection, the connector is inserted into the pipe or into the component, and the connector and the pipe are firmly interconnected via the connection means. At the same time, the sealing elements come into sealing contact with the connector and with the pipe or component.

According to the invention, the projection of the support body is bent at the free end. In this configuration, the support body encompasses the radial flange of the connector at least in part. The projection comes into contact with the end face of the further pipe or the component. In this context, it is advantageous for the support body to be supported by the end face of the further pipe or the component in this region. This provides parallel guideway of the radial flange with respect to the end face of the further pipe or the component. This is particularly the case if the contact region and the fastening means are adjacent to each other. Together with the fastening means, the bent projection causes a steady and parallel contact pressure of the radial flange against the sealing element.

Alternatively, it is conceivable to have a projection which comes into contact with the support body and is to be formed from the end face of the further pipe or the component. This configuration represents a functional reversal with respect to the above-mentioned configuration of the bent support body. This configuration also results in the advantageous parallel guideway of the support body.

The connector is preferably made from plastic material. In this context, the material is preferably selected in such a way that the connector is of the same material as the pipe or component to be connected. Particularly suitable materials for the connector are polymer materials, in particular polyamide (PA), for example polyamide 6 (PA 6). To increase the strength, the plastic material can be provided with fibre reinforcement. In this case, it is in particular conceivable to use glass fibres as fibre reinforcement. A glass-fibre-reinforced plastic material, in particular a glass-fibre-reinforced polyamide, is a particularly stable and pressure-resistant plastic material.

It is also conceivable to have plastic material that is resin-based. Resin-based plastic materials result in hard, glass-like components, which are firmly three-dimensionally cross-linked via chemical bonds. Materials of this type have a high thermomechanical strength in conjunction with a low density.

The support body preferably consists of a metallic material. Particularly, iron materials can be considered here. As a result, the support body is rigid and has a high bending stress capacity. As a result, the bending stress which is introduced asymmetrically via the connection means can be transmitted steadily to the radial flange consisting of plastic material. In this embodiment, the connection arrangement consists of a plastic material and metal composite. As a result of the functional separation, the units of the connection arrangement, in particular the support body and the radial flange, can be optimally adapted to the application and to the expected loads and thus be formed compact and lightweight.

The sealing element can be in the form of an elastomer and metal composite seal washer (slim line seal washer). Composite seal washers of this type comprise an annular elastomer portion which is attached to a support ring of metallic material. The support ring receives the axially acting contact forces and prevents the elastomer portion from wearing prematurely as a result of excessive deformation. The elastomer portion provides the sealing of the gap between the radial flange and the end face of the further pipe or the component. Overall, a composite seal washer is therefore advantageous in relation to sealing air conditioning system components. However, if the requirements on the sealing element are low, it is in principle also conceivable to use O-rings.

The first pipe is preferably connected to the connector in a firmly bonded manner. For this purpose, the connector can comprise a cross-sectional widening, in which the first pipe is received, in the passage channel. The material connection can be produced using an adhesive. Preferably, however, the material connection is provided by welding, for example rotation welding.

The first pipe preferably consists of plastic material. Plastic material pipes have a lower mass than for example metal pipes.

Preferably, the further pipe or the other component of the air conditioning system is equipped to be able to receive the fastening means. For this purpose, the further pipe can for example be provided with a flange, which is of the same material as the further pipe and connected thereto in a firmly bonded manner. The flange comprises a drill hole which receives the fastening means. In the case of a component, the recess for the fastening means can also be formed or produced in the housing wall.

The further pipe which is combined with the connector in the connection arrangement can be made from plastic material. Preferably, a plastic material is selected which is identical to the material of the connector. This results in comparable mechanical and chemical properties.

The connection arrangement according to the invention is suitable in particular for mobile air conditioning systems, in particular for mobile air conditioning systems in vehicles. On the one hand, mobile air conditioning systems should be as lightweight as possible, and on the other hand, because of the vibrations and shocks which occur, they have to be provided with stable connections between the individual components. The connection arrangement according to the invention makes it possible to produce a stable and durably tight connection in conjunction with a low weight.

Some embodiments of the connection arrangement according to the invention are described in greater detail in the following with reference to the drawings, which show, in each case schematically:
- Fig. 1: a section of the connection arrangement;
- Fig. 2: a three-dimensional drawing of the connector with the support body placed upon.

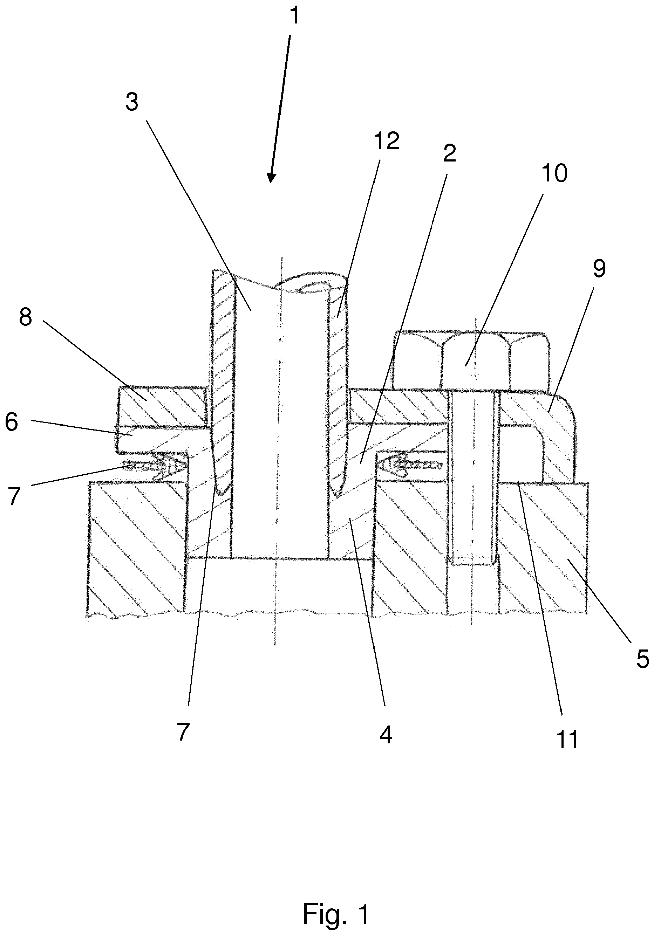

Fig. 1 shows a connection arrangement 1 for an air conditioning system, in this embodiment a mobile air conditioning system for a motor vehicle. The connection arrangement 1 comprises a connector 2, which is connected to a first pipe 12 in a firmly bonded manner on one side. The connector 2 can be connected to a further pipe 5 or another component of the air conditioning system. The connector 2 comprises a cylindrical portion 4, which can be inserted into pipe 5 or into the other component of the air conditioning system. Further, the connector 2 comprises a radial flange 6, a support body 8 being assigned to the radial flange 6. The support body 8 encloses the passage channel 3 and is provided - like the radial flange 6 -with a radially protruding projection 9. The projection 9 is equipped to be able to receive a fastening means 10. For this purpose, a drill hole, into which a screw which forms the fastening means 10 can be inserted, is formed in the support body 8.

The connector is made from plastic material, in this embodiment from polyamide 6 (PA 6). The first pipe 12 is also made from polyamide 6 and fixed into the connector 2 in a firmly bonded manner via rotation welding. Alternatively, it is conceivable to make the connector 2 from a resin-based plastic material. The support body 8 consists of metallic material. In this embodiment, the support body 8 consists of steel. The connector 2 is produced by injection moulding and the support body 8 by die cutting.

A sealing element 7 is assigned to the radial flange 6. The sealing element 7 is arranged in the gap between the radial flange 6 and the end face of the further pipe 5 or the component, and seals in an axial direction. The sealing element 6 is formed as an elastomer and metal composite seal (slim line seal washer) and consists of an annular elastomer portion which is fixed to a metallic support ring.

Alternatively or in addition, it is conceivable to form the sealing element 7 as O-rings and to insert them into grooves built into the radial flange 6 or into the outer circumference of the cylindrical portion 4 of the connector 2.

The further pipe 5, which is connected to the connector, is in the form of a plastic material pipe and in the present embodiment consists of polyamide 6 (PA 6). The further pipe 5 is equipped at an end face with a connection flange 11. The connection flange 11 also comprises a drill hole for receiving the fastening means 10.

The radial flange 6 and the support body 8 are formed congruently on the mutually facing faces, the projection 9 of the support body 8 being bent at its free end in such a way that it encloses the radial flange 6 in portions in the bent region. In an alternative embodiment, a projection, which comes into contact with the support body 8, is formed from the end face of the further pipe 5 or the further component.

To produce the connection arrangement, the connector 2 is inserted into the further pipe 5 after the sealing element 7 has been arranged in the gap between the radial flange 6 and the further pipe 5. The support body 8 is applied to the radial flange 6, and a fastening means 10 produces a rigid connection between the connector 2 and the pipe 5. The projection of the support body 8 comes into contact in such a way that the support body 8 is supported. If the fastening means 10, for example a screw, is tightened, the support body 8 is pressed steadily against the radial flange 6, and the radial flange 6 is in turn pressed against the sealing element 7 steadily over the circumference with parallel displacement. As a result, the sealing element 7 is pressed steadily resulting in a durable and high sealing effect.

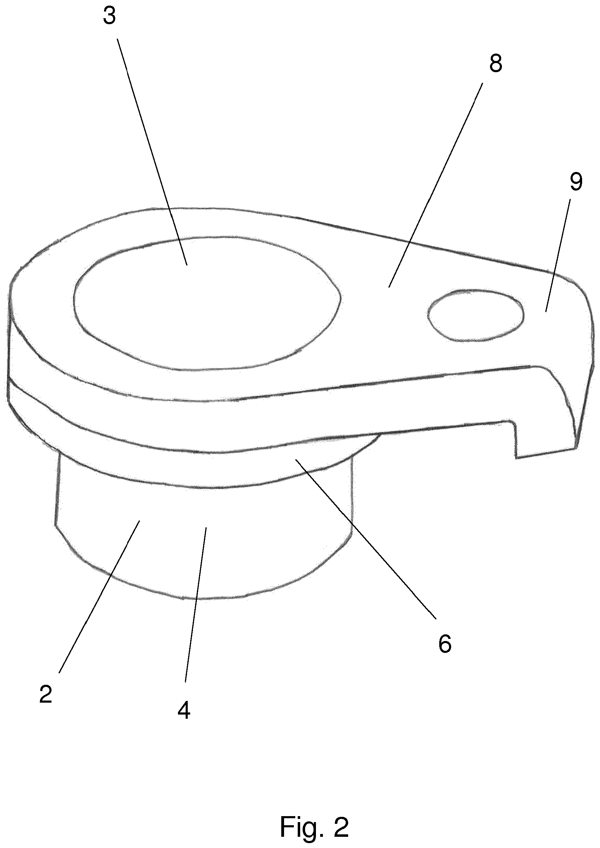

In an advantageous embodiment the connection arrangement 1 according to Fig. 1 and Fig. 2 is part of a mobile air conditioning system. The connection arrangement 1 connects components of the mobile air conditioning system such as pipes, especially pipes of plastic material with further components such as a condenser or evaporator.

## Claims

1. Connection arrangement (1) for an air conditioning system, comprising a connector (2), which is connected to a first pipe (12) and has a passage channel (3) and at least one cylindrical portion (4), which is inserted into a further pipe (5) or into another component of the air conditioning system, and a radial flange (6), to which a sealing element (7) is assigned, wherein a support body (8) is assigned to the radial flange (6), the support body (8) enclosing the passage channel (3) and being provided with a radially protruding projection (9), the projection (9) being equipped to be able to receive at least one fastening means (10), **characterized in that** the projection (9) of the support body (8) is bent at its free end in such a way that it encloses the radial flange (6) in portions in the bent regions, wherein the connector (2) is made from plastic material and wherein the support body (8) and the radial flange (6) are formed congruently with one another at the mutually facing faces.

2. Connection arrangement according to claim 1, **characterized in that** the plastic material is a resin-based plastic material.

3. Connection arrangement according to any of the claims 1 to 2, **characterized in that** the support body (8) is made from metallic material.

4. Connection arrangement according to any of the claims 1 to 3, **characterized in that** the sealing element (7) seals in an axial direction.

5. Connection arrangement according to any of the claims 1 to 4, **characterized in that** at least one sealing element (7) is in the form of an elastomer and metal composite seal.

6. Connection arrangement according to any of the claims 1 to 5, **characterized in that** the pipe (5) or the other component of the air conditioning system is equipped to be able to receive the fastening means (10).

7. Connection arrangement according to claim 6, **characterized in that** the further pipe (5) or the other component is equipped with a connection flange (11) on at least one end face.

8. Connection arrangement according to any of the claims 1 to 7, **characterized in that** the further pipe (5) is in the form of a plastic material pipe.

9. Connection arrangement according to any of the claims 1 to 8, **characterized in that** the first pipe (12) is made from plastic material.

10. Connection arrangement according to any of the claims 1 to 9, **characterized in that** the first pipe (12) is connected to the connector (2) in a firmly bonded manner.

11. Mobile air conditioning system comprising a connection arrangement (1) according to any of the preceding claims.

## Patentansprüche

1. Verbindungsanordnung (1) für eine Klimaanlage, umfassend einen mit einem ersten Rohr (12) verbundenen Konnektor (2) mit einem Durchtrittskanal (3) und zumindest einem zylindrischen Abschnitt (4), welcher in ein weiteres Rohr (5) oder in eine andere Komponente der Klimaanlage eingesetzt ist und einem Radialflansch (6), dem ein Dichtelement (7) zugeordnet ist, wobei ein Tragkörper (8) dem Radialflansch (6) zugeordnet ist, wobei der Tragkörper (8) den Durchtrittskanal (3) umschließt und mit einem radial abragenden Vorsprung (9) vorgesehen ist, wobei der Vorsprung (9) zur Aufnahme mindestens eines Befestigungsmittels (10) ausgerüstet ist, **dadurch gekennzeichnet, dass** der Vorsprung (9) des Tragkörpers (8) an seinem freien Ende derart gebogen ist, dass er den Radialflansch (6) in dem umgebogenen Bereich abschnittsweise umschließt, wobei der Konnektor (2) aus Kunststoff ausgebildet ist und wobei der Tragkörper (8) und der Radialflansch (6) an den einander zugewandten Flächen kongruent ausgebildet sind.

2. Verbindungsanordnung nach Anspruch 1, **dadurch gekennzeichnet, dass** der Kunststoff ein harzbasierter Kunststoff ist.

3. Verbindungsanordnung nach einem der Ansprüche 1 bis 2, **dadurch gekennzeichnet, dass** der Tragkörper (8) aus metallischem Material ausgebildet ist.

4. Verbindungsanordnung nach einem der Ansprüche 1 bis 3, **dadurch gekennzeichnet, dass** das Dichtelement (7) in axialer Richtung dichtet.

5. Verbindungsanordnung nach einem der Ansprüche 1 bis 4, **dadurch gekennzeichnet, dass** das zumindest eine Dichtelement (7) als Elastomer-Metall-Verbunddichtung ausgebildet ist.

6. Verbindungsanordnung nach einem der Ansprüche 1 bis 5, **dadurch gekennzeichnet, dass** das Rohr (5) oder die andere Komponente der Klimaanlage zur Aufnahme des Befestigungsmittels (10) ausgerüstet ist.

7. Verbindungsanordnung nach Anspruch 6, **dadurch gekennzeichnet, dass** das weitere Rohr (5) oder die andere Komponente an zumindest einer Stirnseite mit einem Verbindungsflansch (11) ausgerüstet ist.

8. Verbindungsanordnung nach einem der Ansprüche 1 bis 7, **dadurch gekennzeichnet, dass** das weitere Rohr (5) als Kunststoffrohr ausgebildet ist.

9. Verbindungsanordnung nach einem der Ansprüche 1 bis 8, **dadurch gekennzeichnet, dass** das erste Rohr (12) aus Kunststoff ausgebildet ist.

10. Verbindungsanordnung nach einem der Ansprüche 1 bis 9, **dadurch gekennzeichnet, dass** das erste Rohr (12) stoffschlüssig mit dem Konnektor (2) verbunden ist.

11. Mobiles Klimaanlage, umfassend eine Verbindungsanordnung (1) nach einem der vorhergehenden Ansprüche.

## Revendications

1. Agencement de raccordement (1) pour un système de conditionnement d'air, comprenant un raccord (2), qui est raccordé à un premier tuyau (12) et comporte un canal de passage (3) et au moins une portion cylindrique (4), qui est insérée dans un tuyau supplémentaire (5) ou dans un autre composant du système de conditionnement d'air, et une bride radiale (6), à laquelle un élément d'étanchéité (7) est associé, dans lequel un corps de support (8) est associé à la bride radiale (6), le corps de support (8) renfermant le canal de passage (3) et étant pourvu d'une saillie (9) dépassant radialement, la saillie (9) étant équipée pour être capable de recevoir au moins un moyen de fixation (10), **caractérisé en ce que** la saillie (9) du corps de support (8) est courbée à son extrémité libre de manière à renfermer la bride radiale (6) dans des portions dans les régions courbées, dans lequel le raccord (2) est constitué d'un matériau plastique et dans lequel le corps de support (8) et la bride radiale (6) sont formés de façon congruente l'un avec l'autre aux faces qui se font face mutuellement.

2. Agencement de raccordement selon la revendication 1, **caractérisé en ce que** le matériau plastique est un matériau plastique à base de résine.

3. Agencement de raccordement selon l'une des revendications 1 et 2, **caractérisé en ce que** le corps de support (8) est constitué d'un matériau métallique.

4. Agencement de raccordement selon l'une des revendications 1 à 3, **caractérisé en ce que** l'élément d'étanchéité (7) assure l'étanchéité dans une direction axiale.

5. Agencement de raccordement selon l'une des revendications 1 à 4, **caractérisé en ce qu'**au moins un élément d'étanchéité (7) est sous forme d'un joint d'étanchéité composite en élastomère et en métal.

6. Agencement de raccordement selon l'une des revendications 1 à 5, **caractérisé en ce que** le tuyau (5) ou l'autre composant du système de conditionnement d'air est équipé pour être capable de recevoir le moyen de fixation (10).

7. Agencement de raccordement selon la revendication 6, **caractérisé en ce que** le tuyau supplémentaire (5) ou l'autre composant est équipé d'une bride de raccordement (11) sur au moins une face d'extrémité.

8. Agencement de raccordement selon l'une des revendications 1 à 7, **caractérisé en ce que** le tuyau supplémentaire (5) est sous forme d'un tuyau en matériau plastique.

9. Agencement de raccordement selon l'une des revendications 1 à 8, **caractérisé en ce que** le premier tuyau (12) est constitué d'un matériau plastique.

10. Agencement de raccordement selon l'une des revendications 1 à 9, **caractérisé en ce que** le premier tuyau (12) est raccordé au raccord (2) de manière fixe.

11. Système de conditionnement d'air mobile comprenant un agencement de raccordement (1) selon l'une des revendications précédentes.
